## Europäisches Patentamt
## European Patent Office
## Office européen des brevets

(19)

(11) Publication number : **0 165 661 B1**

# EUROPEAN PATENT SPECIFICATION

(12)

(45) Date of publication of patent specification : 08.07.87

(51) Int. Cl.⁴ : **F 16 D 3/20**, F 16 D 3/21

(21) Application number : **85302088.1**

(22) Date of filing : **26.03.85**

(54) **Universal drive joint.**

(30) Priority : **18.04.84 US 601609**

(43) Date of publication of application : **27.12.85 Bulletin 85/52**

(45) Publication of the grant of the patent : **08.07.87 Bulletin 87/28**

(84) Designated contracting states : **DE FR GB IT**

(56) References cited :
DE-C- 586 776
FR-A- 2 346 598
GB-A- 916 297
GB-A- 978 072
US-A- 4 083 202

(73) Proprietor : **GENERAL MOTORS CORPORATION
General Motors Building 3044 West Grand Boulevard
Detroit Michigan 48202 (US)**

(72) Inventor : **Chyz, George Walter
3907 Stearns Hill Road, Waltham
Massachusets 02154 (US)**
Inventor : **McGregor, David John
3259 Arbutus
Saginaw Michigan, 48603 (US)**

(74) Representative : **Breakwell, John Neil Bower et al
GM Patent Section Vauxhall Motors Limited Luton
Office (F6) P.O. Box No. 3 Kimpton Road
Luton Bedfordshire LU2 OSY (GB)**

## Description

This invention relates to a universal drive joint as specified in the preamble of claim 1, for example as disclosed in US-A-4 083 202.

The said US-A-4 083 202 discloses a tripot-type universal joint having a cylindrical sheet metal cover fixed around the exterior of an outer drive housing. This cover is formed with a plurality of inwardly extending radial tabs having terminal ears extending axially into the interior of the housing to retain intermediate drive rollers of the joint spider assembly within the drive channels of the drive housing.

The present invention is concerned with the provision of new and improved selectively releasable internal spring retention for such a spider assembly in the drive housing, to maintain integrity of the assembly for part handling, shipping and subsequent assembly into the vehicle.

To this end, a universal drive joint in accordance with the present invention is characterised by the features specified in the characterising portion of claim 1.

With the improved retention thereby possible, there is the potential for improved serviceability of the joint.

The spring wire retainer utilised in conformity with the present invention is a potentially economical and lightweight resilient component which can be fabricated from hard-drawn carbon steel spring wire or other suitable spring wire material. In a preferred arrangement, the wire is curved into a generally circular hoop, and the free ends are butt-welded together. This resilient spring wire retainer is formed with three arcuately spaced small-diameter retention segments which are adapted to fit within a segmented retainer groove formed in a coned internal surface of a tripot housing. The resilient spring wire retainer also has three arcuately spaced large-diameter access segments, axially offset from the retention segments by ramp-like blocker steps that are adjacent the outer axial face of the tripot housing to provide convenient structure which can be manually gripped when the retainer is to be installed or removed.

Such installation and removal can be readily accomplished entirely by hand or with simple tools. The steps (ramps) interconnecting the retention segments and the access segments extend along the sides of the drive channels in the tripot housing, adjacent the ends thereof, to form positively located and firmly fixed stops that are physically encountered by the rollers of the spider assembly at the outer extent of their travel to prevent inadvertent withdrawal of the spider assembly from the housing. With a resilient spring wire retainer in conformity with the present invention, a single retainer unit may be repeatedly removed from and re-installed in the tripot housing without any permanemt deformation of the retainer or metal fatigue thereof. After removal, the spider assembly can be axially withdrawn for inspection and repair.

With the spring wire retainer in place, the spider assembly has sufficient retention to permit disconnection of the tripot joint from a transmission output member such as a differential side gear. The spring retainer does not interfere with boot seal mounting to the joint housing, or add significant bulk or weight to the joint, in contrast to what is the case with various prior constructions. The spring wire retainer in conformity with the present invention does not materially interfere with operation of the joint, and can readily be used in a wide variety of housings, including those having external lobes or scallops.

Other potential advantages include the possibility of removing the housing and the spider assembly as a unit from drive connection with the transmission by applying am axial removal force on the drive shaft.

Further, spider assembly can be maintained with minimal interference with the geometric capabilities, including the stroking angle of the drive joint.

Not only is it easy to repeatedly remove and reinstall the spider assembly with minimal tooling, but also this can be achieved without any significant change in the retainer or its capability of retaining the spider assembly within the housing.

The retention available in conformity with the invention is adequate to stop the rollers at their fully out position without detracting from effective and efficient operation of the tripot joint during drive transmission.

In the drawing :

Figure 1 is a fragmentary elevational view, partially in section, of a drive axle assembly which incorporates a universal joint constituting a preferred embodiment of this invention ;

Figure 2 is a cross-sectional view partially broken away and taken substantially along the line 2-2 of Figure 1, in the direction of the arrows ;

Figure 3 is an exploded isometric view of the universal joint of Figure 1 ; and

Figure 4 is a view similar to Figure 1 but showing components of the universal joint moved from the Figure 1 position to illustrate the retention of the spider without material alteration of the stroking-angle capability of the joint assembly.

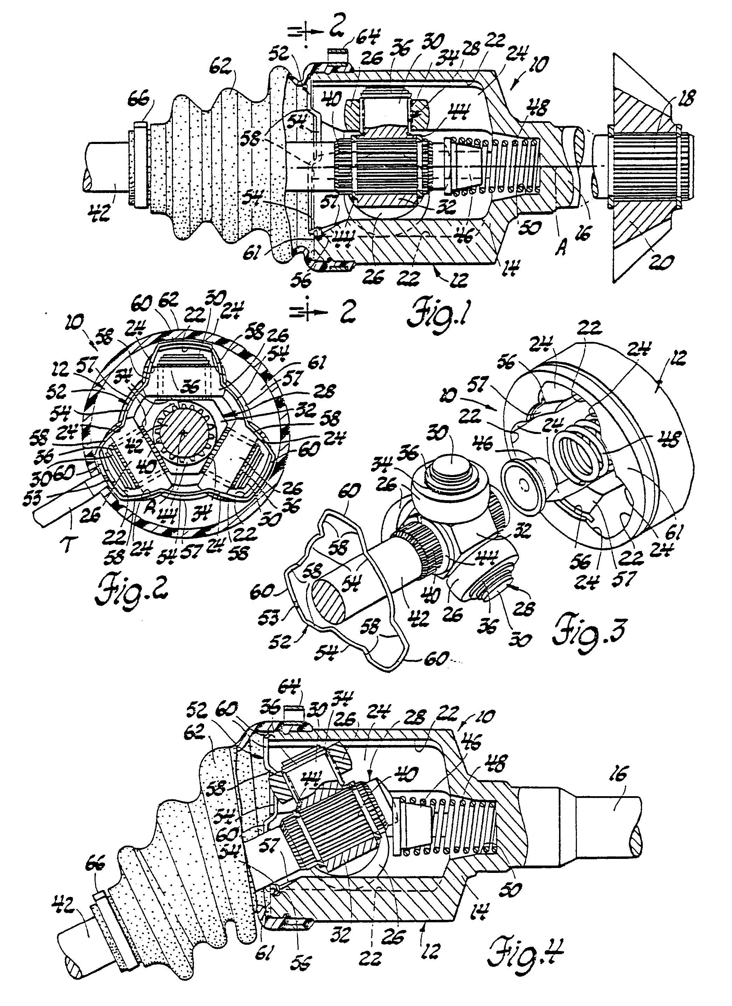

With reference now to the drawing, Figure 1 shows a portion of a vehicle drive axle including a sliding universal joint 10 of the tripot type having a generally cylindrical drive housing 12. The housing is closed at an inboard end by an end wall 14 and has a central drive shaft 16 integral with the end wall 14 which extends axially therefrom into splined connection at 18 with a side gear 20 of a differential gear providing the output of an automatic or manual transmission. The drive housing 12 is open at its outer end, and has three equally spaced and longitudinally extending drive channels 22 formed in the internal wall thereof which are concentric with the longitudinal axis A of the housing and of the drive shaft 16 connected thereto. Each of the longitudinally extending channels is bounded by concave side walls 24 which form part-spherical tracks that engage the corresponding curved surfaces of associated drive rollers 26 of a spider assembly 28. Each drive roller 26 is mounted on an associated trunnion 30 extending radially from a central hub 32 of the spider assembly. The rollers are mounted on the trunnions with a full complement of needle bearings 34 interposed between the inner diameter of the roller and the outer cylindrical surface of the associated trunnion 30. These drive rollers 26 are thus rotatable on the trunnions 30 and are slidable with respect thereto in an axial direction to allow universal stroking pivotal movement of a drive shaft when the vehicle is driven. Annular sheet metal retainers 36, secured to the outer end of each trunnion 30, retain the needle bearings 34 in place and limit radially outward movement of the associated roller on its trunnion. With the above construction, each drive roller is captured in the radial direction in its associated drive channel and is maintained substantially equidistant from the longitudinal axis A during joint operation.

The hub 32 is splined internally for drive connection to an externally splined inboard end portion 40 of an elongate drive shaft 42 that extends into the open end of the drive housing 12. The spider hub is trapped in position on this splined end of the drive shaft by laterally spaced snap rings 44 seated in annular grooves formed in the splines of this drive shaft, as seen in Figure 1. The drive shaft 42 extends outwardly from the hub 32 into drive connection with an outer universal joint, not shown, which is operatively connected to a road wheel assembly, not illustrated. The innermost end face of the elongate drive shaft 42 is convexly curved, and has a spring seat 46 slidably mounted thereon, as shown in Figures 1 and 4, that fits within the end of a helical centring spring 48. The other end of the spring 48 is seated in a spring pocket 50 formed in the end wall 14 of the housing 12.

To maintain the spider assembly 28 and the drive shaft 42 within the housing 12, in conformity with this invention a new and improved spring retainer 52 is formed from spring wire into a hoop, with the free ends butt-welded or otherwise secured together at 53. This closed-wire spring retainer 52 has three inwardly offset and small-diameter locking segments 54 which are equally spaced and are adapted to fit into a segmented annular groove 56 that is cut or otherwise formed in three coned (ramped) inner camming walls 57 of the housing 12 between the equally spaced drive channels 22. Extending from the ends of these locking segments 54 are six outwardly inclined blocking steps (ramps) 58. These six blocking steps 58 extend along the outer ends of respective ones of the six concave side walls 24, and effectively restrict the width of each channel 22, to thereby prevent the removal of the spider assembly and the shaft from the housing by physical contact with the outer surface of the corresponding roller. The outer ends of these six blocking steps (ramps) 58 are interconnected by three large-diameter external arcuate access segments 60 which extend along the outer face 61 of the housing immediately above the drive channels 22. These access segments 60 provide gripping or prying structure slightly offset from the outer face 61, so that simple tooling T (illustrated in Figure 2) can be inserted between the spring retainer and the housing and manipulated to deflect and snap the spring retainer 52 out of the retaining groove to allow the spider assembly 28 to be subsequently axially removed for inspection or repair.

After such inspection or repair, for subsequent re-installation the spring retainer 52 can be deflected by manually gripping the access segments 60 and applying an axial force, which results in radially inward deflection of the locking segments 54 by the conical camming walls 57 for entry directly into the retainer groove 56. On reaching the retainer groove 56, the locking segments 54 deflect radially outwardly into seated locking engagement in the retainer groove.

The joint 10 is sealed by a convoluted elastomeric boot seal 62 having its inboard end secured by a clamp 64 to the outer perimeter of the housing.

The outboard end of the boot seal is secured by clamping means 66 to the drive shaft 42. The spring retainer 52 does not interfere with the boot seal mounting to the housing 12.

The wire spring retainer 52 thereby provides sufficient retention to allow the housing tripot joint 10 to be removed from the transmission by axially pulling on the drive shaft 42 to effect disengagement of the splined end of the drive shaft 16 from the side gear of the differential. In addition, the retainer does not provide any material interference with the geometric capabilities or stroking angle of the joint assembly, even when it is at its maximum-bend condition such as is shown in Figure 4. The spider assembly, the centring spring and other parts are easily serviceable since a person of ordinary skill can readily remove and reinstall the retainer. The retainer, being of spring wire, is subject to minimal fatigue and has long service life even when there are many tear-downs of the joint. Since the spring retainer 52 retains the spider assembly by stopping the drive rollers in their fully out position at a plurality of points, there is new and improved retention to facilitate handling of an assembled joint and also facilitate assembly into the vehicle.

Although the spring wire retainer has been shown in closed-loop form, it could alternatively be formed with free ends. Furthermore, the universal joint itself could alternatively utilize spherical balls rather than rollers. The housing could if required be open at both ends : such a construction would require spring retainers in conformity with the present invention at both ends, to block both of the opposite ends of the drive channels.

## Claims

1. A universal drive joint in which a central drive shaft (42) carries a drive assembly (28) having a plurality of circumferentially spaced drive elements (26), an outer drive housing (12) is disposed around the drive elements (26) and includes a plurality of circumferentially spaced elongate drive channels (22) formed in an internal wall of the housing (12), with each of the drive elements (26) being rotatably mounted with respect to the drive shaft (42) and disposed within a respective drive channel (22) of the housing (12), and retainer means (52) is carried by the drive housing (12), for preventing withdrawal of the drive elements (26), characterised in that the retainer means comprises a curved resilient spring wire retainer (52) for co-operation with a retainer groove (56) that is formed in the wall of the drive housing (12), and that the spring wire retainer (52) includes first segments (54) which are releasably mounted within the retainer groove (56), blocker steps (58) which are formed at the ends of the first segments (54) and project into the ends of the drive channels (22) for reducing the effective width thereof to thereby prevent withdrawal of the drive elements (26) and the drive shaft (42) from drive connection with the drive housing (12), and large-diameter access segments (60) which interconnect adjacent ones of the blocker steps (58) and extend externally of the housing (12) adjacent one end thereof to provide external structure facilitating deflection of the spring wire retainer (52) for removal of the retainer (52) from the retainer groove (56) and the housing (12) and for installation of the retainer (52) into the retainer groove (56) and the housing (12).

2. A universal drive joint according to claim 1, characterised in that the housing (12) includes camming surfaces (57) in the internal wall thereof tapering inwardly towards the retainer groove (56) to cam the spring wire retainer (52) inwardly on insertion of the retainer (52) into the housing (12) for subsequent retention by the retainer groove (56).

3. A universal drive joint according to claim 1 or 2, characterised in that the spring wire retainer (52) is of annular configuration.

4. A universal drive joint according to any one of claims 1 to 3, characterised in that the drive elements of the drive assembly comprise drive rollers (26) which are rotatably mounted on respective radial trunnions (30) of a drive spider assembly (28) connected to the drive shaft (42), each of the drive rollers (26) is disposed for linear travel along a respective one of the elongate drive channels (22), and the blocker steps (58) of the spring wire retainer (52) are effective to contact the respective drive rollers (26) to prevent withdrawal of the drive spider assembly (28) from the housing (12).

5. A universal drive joint according to claim 4, characterised in that the interior of the drive housing (12) defines a chamber for receiving the drive spider assembly (28).

6. A universal drive joint according to any one of claims 1 to 5, characterised in that shaft means (16) is drivingly connected to the drive housing (12), for connection to a transmission output member (20).

7. A universal drive joint according to any one of claims 1 to 6, characterised in that the first segments (54) of the spring wire retainer (52) are of arcuate form and have a smaller diameter than the access segments (60), and that the retainer groove (56) within which the first segments (54) are releasably mounted is of segmented form.

8. A universal drive joint according to any one of claims 1 to 7, characterised in that the retainer groove (56) in the drive housing (12) is formed adjacent an open end of the housing (12).

9. A universal drive joint according to any one of claims 1 to 8, characterised in that the drive assembly (28) includes three of the circumferentially spaced drive elements (26), to form a tripot joint.

## Patentansprüche

1. Universelle Antriebsverbindung bei der eine zentrale Antriebswelle (42) eine Antriebsanordnung (28) mit einer Mehrzahl von am Umfang beabstanded voneinander angeordneten Antriebselementen (26) trägt, bei der ein äußeres Antriebsgehäuse (12) um die Antriebselemente (26) angeordnet ist und eine Mehrzahl von am Umfang beabstanded voneinander angeordneten länglichen Antriebskanälen(22) umfaßt, die in einer inneren Wand des Gehäuses (12) ausgebildet sind, wobei jedes der Antriebselemente (26) in Bezug auf die Antriebswelle (42) drehbar befestigt und in einem betreffenden Antriebskanal (22) des Gehäuses (12) angeordnet ist, und bei der eine Rückhalteeinrichtung (52) vom Antriebsgehäuse (12) getragen wird, um ein Herausziehen der Antriebselemente (26) zu verhindern, dadurch gekennzeichnet, daß die Rückhalteeinrichtung einen gekrümmten, elastischen Federdraht-Rückhalter (52) zum Zusammenwirken mit einer Rückhaltenut (56) aufweist, die in der Wand des Antriebsgehäuses (12) ausgebildet ist, und daß der Federdraht-Rückhalter (52) erste Segmente (54) umfaßt, die in der Rückhaltenut (56) lösbar gehalten sind, sowie Sperrstufen (58) aufweist, die an den Enden der ersten Segmente (54) ausgebildet sind und in die Enden der Antriebskanäle (22) hineinragen, um deren effektive Weite zu reduzieren und so ein Herausziehen der Antriebselemente (26) und der Antriebswelle (42) aus der Antriebsverbindung mit dem Antriebsgehäuse (12) zu vermeiden, und zugängliche Segmente (60) mit großem Durchmesser umfaßt, die benachbarte Sperrstufen (58) miteinander verbinden und sich außerhalb des Gehäuses (12) dessen einem Ende benachbart erstrecken, um eine außenliegende Struktur zu schaffen, die das Abbiegen des Federdraht-Rückhalters (52) zur Herausnahme des Rückhalters (52) aus der Rückhaltenut (56) und dem Gehäuse (12) und zum Einsetzen des Rückhalters (52) in die Rückhaltenut (56) und das Gehäuse (12) erleichtert.

2. Universelle Antriebsverbindung nach Anspruch 1, dadurch gekennzeichnet, daß das Gehäuse (12) Betätigungsflächen (57) an seiner inneren Wandung aufweist, die sich nach innen zur Rückhaltenut (56) verjüngen, um den Federdraht-Rückhalter (52) beim Einsetzen des Rückhalters (52) in das Gehäuse (12) nach innen zu drücken, um ihn anschließend durch die Rückhaltenut (56) festzuhalten.

3. Universelle Antriebsverbindung nach Anspruch 1 oder 2, dadurch gekennzeichnet, daß der Federdraht-Rückhalter (52) ringförmige Gestalt besitzt.

4. Universelle Antriebsverbindung nach einem der Ansprüche 1 bis 3, dadurch gekennzeichnet, daß die Antriebselemente der Antriebsanordnung Antriebsrollen (26) aufweisen, die an entsprechenden radialen Zapfen (30) einer mit der Antriebswelle (42) verbundenen Kreuzgelenkanordnung (28) drehbar befestigt sind, wobei jede der Antriebsrollen (26) zur linearen Bewegung entlang eines betreffenden der länglichen Antriebskanäle (22) eingerichtet ist, und daß die Sperrstufen (58) des Federdraht-Rückhalters (52) die betreffenden Antriebsrollen (26) berühren können, um das Herausziehen der Kreuzgelenkanordnung (28) aus dem Gehäuse (12) zu verhindern.

5. Universelle Antriebsverbindung nach Anspruch 4, dadurch gekennzeichnet, daß das Innere des Antriebsgehäuses (12) eine Kammer zur Aufnahme der Kreuzgelenkanordnung (28) bestimmt.

6. Universelle Antriebsverbindung nach einem der Ansprüche 1 bis 5, dadurch gekennzeichnet, daß eine Welleneinrichtung (16) mit dem Antriebsgehäuse (12) zur Verbindung mit einem Abtriebsglied (20) verbunden ist.

7. Universelle Antriebsverbindung nach einem der Ansprüche 1 bis 6, dadurch gekennzeichnet, daß die ersten Segmente (54) des Federdraht-Rückhalters (52) bogenförmig sind und einen geringeren Durchmesser als die zugänglichen Segmente (60) besitzen und daß die Rückhaltenut (56), in der die ersten Segmente (54) freigebbar befestigt sind, Segmentform besitzt.

8. Universelle Antriebsverbindung nach einem der Ansprüche 1 bis 7, dadurch gekennzeichnet, daß die Rückhaltenut (56) im Antriebsgehäuse (12) einem offenen Ende des Gehäuses (12) benachbart ausgebildet ist.

9. Universelle Antriebsverbindung nach einem der Ansprüche 1 bis 8, dadurch gekennzeichnet, daß die Antriebsanordnung (28) drei der über den Umfang beabstanded angeordneten Antriebselemente (26) umfaßt, um so eine Dreibeinverbindung zu bilden.

**Revendications**

1. Joint de transmission dans lequel un arbre central de transmission (42) porte un ensemble de transmission (28) comportant plusieurs éléments de transmission (26) espacés dans le sens circonférenciel, un boîtier extérieur de transmission (12) est disposé autour de ces éléments de transmission (26) et comporte plusieurs canaux de transmission allongés (22), espacés dans le sens circonférenciel et ménagés dans une paroi intérieure du boîtier (12), chacun des éléments de transmission (26) étant monté rotatif par rapport à l'arbre de transmission (42) et disposé à l'intérieur d'un canal de transmission respectif (22) du boîtier (12) et des moyens d'arrêt ou de retenue 52 sont portés par ce boîtier de transmission (12) afin d'empêcher une extraction des éléments de transmission (26), caractérisé en ce que les moyens d'arrêt comprennent un élément d'arrêt élastique et incurvé en fil d'acier à ressort (52) destiné à coopérer avec une gorge de retenue (56) qui est ménagée dans la paroi du boîtier de transmission (12), et en ce que l'élément d'arrêt en fil d'acier à ressort (52) comporte de premiers segments (54) qui sont montés de manière amovible dans la gorge de retenue (56), des gradins de verrouillage (58) qui sont réalisés aux extrémités de ces premiers segments (54) et font saillie dans les extrémités des canaux de transmission (22), afin de réduire la largeur effective de ceux-ci en vue d'empêcher ainsi que les éléments de transmission (26) et l'arbre de transmission (42) soient écartés de la jonction de transmission avec le boîtier de transmission (12), et des segments d'accès de grand diamètre (60) qui relient mutuellement des gradins adjacents parmi les gradins de verrouillage (58) et s'étendent à l'extérieur du boîtier (12) au voisinage de l'une de ses extrémités de façon à offrir une structure extérieure qui facilite un fléchissement de l'élément d'arrêt en fil d'acier à ressort (52) en vue d'une extraction de cet élément d'arrêt (52) hors de la gorge de retenue (56) et du boîtier (12) et en vue d'une mise en place de cet élément d'arrêt (52) dans cette gorge de retenue (56) et ce boîtier (12).

2. Joint de transmission selon la revendication 1, caractérisé en ce que le boîtier (12) comporte, dans sa paroi intérieure, des surfaces à effet de came (57) convergeant vers l'intérieur en direction de la gorge de retenue (56) de façon à guider à la façon d'une came l'élément d'arrêt en fil d'acier à ressort (52) vers l'intérieur quand on insère cet élément d'arrêt (52) dans le boîtier (12) afin qu'il soit retenu par la suite par la gorge de retenue (56).

3. Joint de transmission selon la revendication 1 ou 2, caractérisé en ce que l'élément d'arrêt en fil d'acier à ressort (52) est de forme annulaire.

4. Joint de transmission selon l'une quelconque des revendications 1 à 3, caractérisé en ce que les éléments de transmission de l'ensemble de transmission comprennent des galets de transmission (26) qui sont montés rotatifs sur des tourillons radiaux respectifs (30) d'un croisillon de transmission (28) relié à l'arbre de transmission (42), chacun de ces galets de transmission (26) étant disposé de façon à pouvoir se déplacer de manière rectiligne le long de l'un, associé, des canaux de transmission allongés (22), et les gradins de retenue (58) de l'élément d'arrêt en fil d'acier à ressort (52) servent à se trouver au contact des galets de transmission (26) respectifs afin d'empêcher une extraction du croisillon de transmission (28) hors du boîtier (12).

5. Joint de transmission selon la revendication 4, caractérisé en ce que l'intérieur du boîtier de transmission (12) délimite une chambre destinée à recevoir le croisillon de transmission (28).

6. Joint de transmission selon l'une quelconque des revendications 1 à 5, caractérisé en ce qu'un arbre (16) est relié, en entraînement, au boîtier de transmission (12), en vue d'une liaison avec un élément de sortie de transmission (20).

7. Joint de transmission selon l'une quelconque des revendications 1 à 6, caractérisé en ce que les premiers segments (54) de l'élément d'arrêt en fil d'acier à ressort (52) sont en forme d'arc de cercle et ont un diamètre plus petit que les segments d'accès (60), et en ce que la gorge de retenue (56), à l'intérieur de laquelle sont montés de manière amovible les premiers segments (54), se présente sous la forme de plusieurs segments.

8. Joint de transmission selon l'une quelconque des revendications 1 à 7, caractérisé en ce que la gorge de retenue (56) située dans le boîtier de transmission (12) est réalisée au voisinage d'une extrémité ouverte de ce boîtier (12).

9. Joint de transmission selon l'une quelconque des revendications 1 à 8, caractérisé en ce que les éléments de transmission espacés dans le sens circonférenciel (26) de l'ensemble de transmission (28) sont au nombre de trois, de façon à former un joint tripode.

Fig.1

Fig.2

Fig.3

Fig.4